# EUROPÄISCHE PATENTANMELDUNG

(11) **EP 1 826 176 A2**
(43) Veröffentlichungstag der Anmeldung: **29.08.2007**
(21) Anmeldenummer: 07001654.8
(22) Anmeldetag: 25.01.2007
(51) Int. Cl.: C01B 3/56

(54) **Druckwechseladsorptionsverfahren und -vorrichtung**

(30) Priorität: 22.02.2006 DE 102006008194
(71) Anmelder: Linde Aktiengesellschaft, 65189 Wiesbaden (DE)
(72) Erfinder: Leitgeb, Paul, Dr., 82049 Pullach (DE); Oppermann, Jan, Dr., 81477 München (DE)
(74) Vertreter: Zahn, Christoph

(57) **Zusammenfassung**

Es werden ein Verfahren sowie eine Vorrichtung zur adsorptiven Zerlegung eines Wasserstoff enthaltenden Gasgemisches, wobei das Gasgemisch über ein Adsorptionsbett, aufweisend eine Aktivkohleschicht und eine ihr nachgeschalteten Molekularsiebschicht vom 5A-Typ, geleitet und ein Wasserstoff-reiches Gasgemisch abgezogen wird, beschrieben.

Erfindungsgemäß ist zwischen der Aktivkohleschicht und der ihr nachgeschalteten Molekularsiebschicht eine Zwischenschicht, bestehend aus einem Molekularsieb vom X-Typ, vorgesehen.

Hierbei kommt bzw. kommen als Molekularsieb(e) vom X-Typ ein CaX-Typ und/oder ein NaX-Typ zur Anwendung.

## Beschreibung

Die Erfindung betrifft ein Verfahren zur adsorptiven Zerlegung eines Wasserstoff enthaltenden Gasgemisches, wobei das Gasgemisch über ein Adsorptionsbett, aufweisend eine Aktivkohleschicht und eine ihr nachgeschalteten Molekularsiebschicht vom 5A-Typ, geleitet und ein Wasserstoff-reiches Gasgemisch abgezogen wird.

Ferner betrifft die Erfindung eine Vorrichtung zur adsorptiven Zerlegung eines Wasserstoff enthaltenden Gasgemisches, aufweisend eine Aktivkohleschicht und eine ihr nachgeschalteten Molekularsiebschicht vom 5A-Typ, über die das zu zerlegende Gasgemisch geleitet wird.

Mittels Druckwechsel-Adsorptionsverfahren kann Wasserstoff aus unterschiedlichen Gasgemischen, bspw. aus Steamreformer- oder Raffineriegasgemischen, gewonnen werden. Hierbei werden schwerere Komponenten abgetrennt, um Wasserstoff als Produktgas möglichst rein und mit großer Ausbeute gewinnen zu können. Die Abtrennung von Komponenten wie N₂, O₂, CO, CH₄ und anderen Kohlenwasserstoffen sowie CO₂ gelingt mit Hilfe von Adsorptionsbetten, die Aktivkohle und Molekularsiebe als Adsorbentien in einem Schichtbett aufweisen. Das Roh- bzw. Wasserstoff enthaltende Gasgemisch wird somit adsorptiv in zwei Prozessgas-Ströme aufgetrennt: den Produktgas-Strom, bestehend aus Wasserstoff mit geringen Verunreinigungen von N₂, O₂, CO und/oder CH₄ sowie den Restgas-Strom mit den angereicherten, schwereren Komponenten.

Bei der Gewinnung bzw. Reinigung von Wasserstoff aus einem Steamreformergas mittels eines Druckwechsel-Adsorptionsprozesses werden in der vorgeschalteten Aktivkohle-Schüttung vor allem die Komponenten CO₂ und CH₄ abgereichert. Die Kapazität der Aktivkohle bezüglich dieser Komponenten sowie die unerwünschte Coadsorption von Wasserstoff bestimmen maßgeblich die Anlagenperformance des Druckwechsel-Adsorptionsprozesses. Je nach Prozessbedingungen ist das optimale Aktivkohle-Molekularsieb-Verhältnis am Aufbau der Gesamtschüttung zu ermitteln. Entscheidend für ein konkurrenzfähiges Druckwechsel-Adsorptionsverfahren sind die Parameter Wasserstoff-Produktivität sowie -Ausbeute.

Aufgrund der (Co)Adsorption von Wasserstoff an der Aktivkohleschicht und des hohen Lückenvolumens der Aktivkohleschicht gelangen nennenswerte Mengen von Wasserstoff in den Restgas-Strom. Eine Reduzierung dieser Wasserstoff-Menge würde zu einer erwünschten Steigerungen der Wasserstoff-Ausbeute und -Produktivität des jeweils realisierten Druckwechsel-Adsorptionsprozesses führen. Aufgrund der guten Desorbierbarkeit des Kohlendioxids an der Aktivkohleschicht und der gegenüber standardmäßig bei derartigen Verfahren eingesetzten Molekularsieben besseren Arbeitsbeladung bezüglich CO₂ und CH₄ muss für eine optimale Gestaltung des jeweils realisierten Druckwechsel-Adsorptionsprozesses ein erheblicher Anteil von Aktivkohle an der Gesamtschüttung eingesetzt werden.

Aufgabe der vorliegenden Erfindung ist es, ein gattungsgemäßes Verfahren sowie eine gattungsgemäße Vorrichtung zur adsorptiven Zerlegung eines Wasserstoff enthaltenden Gasgemisches anzugeben, das bzw. die die vorgenannten Nachteile vermeidet.

Zur Lösung dieser Aufgabe werden ein gattungsgemäßes Verfahren sowie eine gattungsgemäße Vorrichtung zur adsorptiven Zerlegung eines Wasserstoff enthaltenden Gasgemisches vorgeschlagen, das bzw. die dadurch gekennzeichnet ist, dass zwischen der Aktivkohleschicht und der ihr nachgeschalteten Molekularsiebschicht eine Zwischenschicht, bestehend aus einem Molekularsieb vom X-Typ, vorgesehen ist.

Weitere vorteilhafte Ausgestaltungen des erfindungsgemäßen Verfahrens bzw. der erfindungsgemäßen Vorrichtung zur adsorptiven Zerlegung eines Wasserstoff enthaltenden Gasgemisches sind dadurch gekennzeichnet, dass
- als Molekularsieb(e) vom X-Typ ein CaX-Typ und/oder ein NaX-Typ zur Anwendung kommt bzw. kommen,
- das Verhältnis Aktivkohleschicht : Zwischenschicht (X-Typ):
   Molekularsiebschicht (5A-Typ) in Volumenanteilen
      0,1 bis 0,5 : 0,1 bis 0,5 : 0,2 bis 0,8 , vorzugsweise 0,3 : 0,2 : 0,5 beträgt, und
- sofern das zu zerlegende, Wasserstoff enthaltende Gasgemisch Wasser enthält, die Entfernung des Wassers in einer der Aktivkohleschicht vorgeschalteten Adsorbensschicht erfolgt.

Überraschenderweise hat sich nunmehr gezeigt, dass durch das Vorsehen einer Zwischenschicht, bestehend aus einem Molekularsieb vom X-Typ, eine deutliche Verbesserung der Anlagen- bzw. Prozessleistungen im Hinblick auf Kapazität und Wasserstoff-Ausbeute erzielt werden kann. Dies gilt insbesondere bei der Verwendung eines Molekularsiebes vom NaX-Typ als Zwischenschicht.

Ein Molekularsieb vom NaX-Typ zeichnet sich durch ein gegenüber standardmäßig eingesetzten Molekularsieben vom 5A-Typ gutes Desorptionsverhalten, insbesondere gegenüber Kohlendioxid, aus. Aufgrund der höheren Schüttdichte - diese beträgt ca. 700 g/l. gegenüber ca. 400 bis 600 g/l bei verschiedenen Aktivkohle-Materialien - und des damit verbundenen geringeren Lückenvolumens sowie der geringeren Wasserstoff-Adsorption gelangt bei teilweisem Ersatz der Aktivkohle durch ein Molekularsieb vom X-Typ, insbesondere vom NaX-Typ, deutlich weniger Wasserstoff in den Restgas-Strom, woraus eine nennenswerte Steigerung der Wasserstoff-Ausbeute sowie der Produktivität des Druckwechsel-Adsorptionsprozesses resultiert.

Dies wird erreicht, da das für die Zwischenschicht verwendete Molekularsieb Eigenschaften der Aktivkohle - also hohe Kohlendioxid-Arbeitsbeladung, hohe Adsorptionsbeladungen für Kohlendioxid und Methan - und des Molekularsiebes - also guter Stoffübergang und hohe Adsorptionsbeladungen für Kohlendioxid, Methan, Kohlenmonoxid und Stickstoff - aufweist.

Für die Feinreinigung des Wasserstoffs, also die Abreicherung der Komponenten CO, CH₄ und N₂ wird ein gewisser Anteil Molekularsieb vom 5A-Typ als oberste Schüttung am Adsorberaustritt benötigt. Ebenfalls wird zur Bulk-Abtrennung der Komponenten Kohlendioxid und Methan ein gewisser Anteil von Aktivkohle am Adsorbereintritt benötigt - aufgrund der höheren Arbeitsbeladung der Aktivkohle gegenüber dem Molekularsieb.

Im Falle der Verwendung eines Molekularsiebes vom NaX-Typ als Zwischenschicht kann die der Zwischenschicht vorgeschaltete Aktivkohle-Schüttung - insbesondere bei geringen Kohlendioxid-Gehalten und/oder bei geringer Last - deutlich kleiner dimensioniert werden, als dies bei den zum Stand der Technik zählenden, gattungsgemäßen Verfahren und Vorrichtungen der Fall ist.

Das erfindungsgemäße Verfahren sowie die erfindungsgemäße Vorrichtung zur adsorptiven Zerlegung eines Wasserstoff enthaltenden Gasgemisches seien anhand des nachfolgenden Verfahrensbeispieles näher erläutert.

Das Verfahrensbeispiel sei ein sog. 411-H₂-Druckwechsel-Adsorptionsprozess. bei dem vier aktive Adsorber und ein Druckausgleichsschritt vorgesehen sind. Ein derartiger Adsorptionsprozess dient bspw. der Wasserstoff-Gewinnung aus einem Steamreformergas. Das zu zerlegende Wasserstoff enthaltende Gasgemisch weise 15 Vol.-% CO₂, 5 Vol.-% CH₄, 5 Vol.-% CO, 3 Vol.-% N₂ und 72 Vol.-% CH₄ auf. Die Verunreinigungen im Produktgas betragen max. 10 ppm CO.
1) Stand der Technik (2-Schicht-Bett plus vorgeschaltete Trocknerschicht)
   - Verhältnis Aktivkohle / 5A-Molekularsieb in Volumenanteilen: 0,54 : 0,46
   - Adsorptionsdruck: 20 bar
      Spülgasdruck: 1,45 bar
   - Rohgastemperatur: 23 °C
   - normierte Kapazität: 1,00
   - normierte Produktitvität: 1,00
   - Wasserstoff-Ausbeute: 84,8 %
2) Erfindung (3-Schicht-Bett plus vorgeschaltete Trocknerschicht)
   - Verhältnis Aktivkohle / Zwischenschicht (NaX) / 5A-Molekularsieb in Volumenanteilen: 0,37 : 0,16 : 0,47
   - Adsorptionsdruck: 20 bar
   - Spülgasdruck: 1,45 bar
   - Rohgastemperatur: 23 °C
   - normierte Kapazität: 1,041
   - normierte Produktitvität: 1,014
   - Wasserstoff-Ausbeute: 86,0 %

## Patentansprüche

1. Verfahren zur adsorptiven Zerlegung eines Wasserstoff enthaltenden Gasgemisches, wobei das Gasgemisch über ein Adsorptionsbett, aufweisend eine Aktivkohleschicht und eine ihr nachgeschalteten Molekularsiebschicht vom 5A-Typ, geleitet und ein Wasserstoff-reiches Gasgemisch abgezogen wird, **dadurch gekennzeichnet, dass** zwischen der Aktivkohleschicht und der ihr nachgeschalteten Molekularsiebschicht eine Zwischenschicht, bestehend aus einem Molekularsieb vom X-Typ, vorgesehen ist.

2. Verfahren nach Anspruch 1, **dadurch gekennzeichnet, dass** als Molekularsieb(e) vom X-Typ ein CaX-Typ und/oder ein NaX-Typ zur Anwendung kommt bzw. kommen.

3. Verfahren nach Anspruch 1 oder 2, **dadurch gekennzeichnet, dass** das Verhältnis Aktivkohleschicht : Zwischenschicht : Molekularsiebschicht in Volumenanteilen 0,1 bis 0,5 : 0,1 bis 0,5 : 0,2 bis 0,8 , vorzugsweise 0,3 : 0,2 : 0,5 beträgt.

4. Verfahren nach einem der vorhergehenden Ansprüche 1 bis 3, wobei das zu zerlegende, Wasserstoff enthaltende Gasgemisch Wasser enthält, **dadurch gekennzeichnet, dass** die Entfernung des Wassers in einer der Aktivkohleschicht vorgeschalteten Adsorbensschicht erfolgt.

5. Vorrichtung zur adsorptiven Zerlegung eines Wasserstoff enthaltenden Gasgemisches, aufweisend eine Aktivkohleschicht und eine ihr nachgeschalteten Molekularsiebschicht vom 5A-Typ, über die das zu zerlegende Gasgemisch geleitet wird, **dadurch gekennzeichnet, dass** zwischen der Aktivkohleschicht und der ihr nachgeschalteten Molekularsiebschicht vom 5A-Typ eine Zwischenschicht, bestehend aus einem Molekularsieb vom X-Typ, vorgesehen ist.

6. Vorrichtung nach Anspruch 5, **dadurch gekennzeichnet, dass** das bzw. die Molekularsieb(e) vom X-Typ ein CaX-Typ und/oder ein NaX-Typ ist bzw. sind.

7. Vorrichtung nach Anspruch 5 oder 6, **dadurch gekennzeichnet, dass** das Verhältnis Aktivkohleschicht : Zwischenschicht : Molekularsiebschicht in Volumenanteilen 0,1 bis 0,5 : 0,1 bis 0,5 : 0,2 bis 0,8 , vorzugsweise 0,3 : 0,2: 0,5 beträgt.

8. Vorrichtung nach einem der vorhergehenden Ansprüche 5 bis 7, **dadurch gekennzeichnet, dass** der Aktivkohleschicht eine für die Entfernung von Wasser geeignete Adsorbensschicht vorgeschaltet ist.
